# EUROPEAN PATENT APPLICATION

(11) **EP 3 321 913 A1**
(43) Date of publication of application: **16.05.2018**
(21) Application number: 16824313.7
(22) Date of filing: 04.07.2016
(51) Int. Cl.: G08G 1/16, B60K 35/00, B60R 1/00, B60R 11/02, G02B 27/01, G09G 5/00, G09G 5/36

(54) **VEHICLE-USE IMAGE DISPLAY SYSTEM AND METHOD**

(30) Priority: 10.07.2015 JP 2015138224
(71) Applicant: Tayama, Shuichi, Tokyo 167-0032 (JP); Image Co., Ltd., Tokyo 104-0041 (JP)
(72) Inventor: WATANABE, Yukio, Tokyo 104-0041 (JP)
(74) Representative: Dr. Gassner & Partner mbB
(86) International application number: PCT/JP2016/069803
(87) International publication number: WO 2017/010333

(57) **Abstract**

Provided is a vehicle-use image display system and a method therefor capable of displaying images with which a driver can recognize, more appropriately and more instantaneously, an object in eyesight through a front windshield during driving a vehicle even in environment with poor visibility. A vehicle-use image display system (1) that configures a driving support system in combination with an ACC system (3) or a travel environment recognition system (42) includes a display device (4) that uses a front windshield (15) for screen displaying, and a display controller (5) for controlling image displaying, by the display device, of an object detected in front of the own vehicle. The display controller causes a marking image or a displaying outline having a shape corresponding to an outline of the object to be displayed as being superimposed to the object actually existing in actual scenery viewed through the front windshield. A displaying property of the marking image may be adjusted and varied in accordance with influence of the object to the own vehicle.

## Description

### TECHNICAL FIELD

The present invention relates to a vehicle-use image display system and a method therefor to be used for supporting driving of a vehicle especially such as an automobile.

### BACKGROUND ART

Traditionally, a variety of driving support systems have been developed to support safety driving of an automobile. For example, there has been well-known an automatic cruising device for travelling while an inter-vehicular distance against a preceding vehicle ahead is kept constant under constant-speed and inter-vehicular-distance control (Adaptive Cruise Control: ACC) using a radar apparatus mounted on a front section of a vehicle (e.g., see Patent Literature 1). According to disclosure in Patent Literature 1, a vehicle travels as keeping a speed constant at a set vehicle speed when a preceding vehicle is not detected and travels as keeping an inter-vehicular distance at a set inter-vehicular distance when a preceding vehicle is detected.

Further, there has been proposed a vehicle-use information transmission device for transmitting risks around an own vehicle that are recognizable easily and intuitively for a driver (e.g., see Patent Literature 2). According to the device, a dangerous object such as a pedestrian, a bicycle, and another vehicle existing in front of the own vehicle is detected using cameras, a radar sensor, and the like mounted on the own vehicle and the object is displayed as a figure at a display device at an instrument panel to cause the driver to recognize presence of the object.

Similarly, there has been known a vehicle-periphery monitor device that displays, at an image display device including a head-up display (HUD), presence and a category of an object having a high possibility to cause contact with an own vehicle to inform a driver thereof (e.g., see Patent Literature 3). The category of the object such as a pedestrian, a bicycle, and an animal is determined based on a shape and a size thereof, and then, a specific mark corresponding to the category and a rectangular frame surrounding the mark are displayed at the HUD at a position corresponding to the object.

### CITED LITERATURE

### PATENT LITERATURE

Patent Literature 1: Japanese Patent Application Laid-Open No. 2002-264688
Patent Literature 2: International Patent Application Laid-Open No. 2013/088535
Patent Literature 3: Japanese Patent Application Laid-Open No. 2010-108264

### SUMMARY OF THE INVENTION

According to the automatic cruising device in the related art described above, when an inter-vehicular distance sensor lose sight of a preceding vehicle during tailing travel with a set inter-vehicular distance, constant-speed travel is performed after accelerating is performed to a previously-set speed. Such sudden acceleration may cause the vehicle to be too close to a preceding vehicle or bring a sense of uneasiness to a driver. In contrast, a behavior such that an acceleration operation is not performed promptly after losing sight of a preceding vehicle, that automatic acceleration is small, or the like causes a problem that a sense of discomfort is brought to the driver. In other words, if a driver can timely recognize a situation that the automatic cruising device is about to lose sight of a preceding vehicle, adequate control can be performed for any behavior of the vehicle.

According to the device disclosed in Patent Literature 2, since a detected dangerous object is displayed at the display device at the instrument panel, a driver is required to largely move the head and eyes from the front during driving to look thereat, so that dangerousness thereof may be increased. Further, unless a driver is conversant with a displayed figure and a displaying method, the driver cannot evaluate or recognize, at once, what the displayed dangerous object specifically is, how dangerous it is, and the like. In such a case, there is a fear that inadequate determination is made for danger avoidance or avoidance action is delayed.

The device disclosed in Patent Literature 3 is advantageous in that displaying is performed using the HUD compared to a case without using the HUD. However, since presence and a category of an object is displayed as being replaced by a mark having a previously-determined shape as being similar to the device disclosed in Patent Literature 2, there is a fear that the driver cannot evaluate or recognize, at once, what the object represented by the mark specifically is, that whether or not and how danger thereof exists, and the like. In particular, it is preferable for the driver to directly recognize, with eyes, what the object specifically is. Accordingly, the actual object surrounded by the rectangular frame is required to be clearly seen. However, during travelling in low visibility environment, it is expected to be extremely difficult for the driver to specifically recognize or evaluate a target in the rectangular frame displayed by the HUD.

Further, in a case of poor visibility due to being in adverse weather such as a dense fog, a rain storm, and a snow storm or in night-time without street lamps, objects dangerous for a travelling vehicle are not limited to persons such as pedestrians and animals. Further, in a city area, there may be a case that vehicular lanes are varied in accordance with road situations, time zones, and the like. Thus, objects possibly dangerous for a travelling vehicle also include situations of a road and/or traffic, for example, including other vehicles therearound, road boundaries, various road appendages, and obstacles such as fallen objects, fallen trees on a road, and damaged objects. However, in the related art described above, safety measures for such various objects are not considered at all or sufficiently.

In order to solve the abovementioned problems in the related art, an object of the present invention is to provide a vehicle-use image display system and a method therefor, for actualizing safe travelling of a vehicle as supporting a driver of the vehicle, capable of displaying images with which a driver can recognize, more appropriately and more instantaneously, and more intuitively in a more preferable case, objects that is required to be recognized in eyesight through a front windshield even in environment or under conditions in which good sight cannot be maintained sufficiently.

A vehicle-use image display system of the present invention is to be used for supporting driving of an own vehicle and includes a display device configured to use a front windshield of the own vehicle for screen displaying, and a display controller configured to control image displaying, by the display device, of an object detected in front of the own vehicle. Here, the display controller displays a marking image having a shape corresponding to an outline of the object to be superimposed to the object actually existing in actual scenery viewed through the front windshield, and the display controller adjusts and varies a displaying property of the marking image in accordance with possible influence to be caused by the object to a drive behavior of the own vehicle.

Owing to that the display controller adjusts and varies the displaying property of the marking image in accordance with the influence to be caused by the object as described above, a driver of the own vehicle can previously recognize possible influence to driving of the own vehicle to be caused by the object existing in real time in front of the own vehicle and a magnitude of the influence. Then, owing to that the vehicle-use image display system of the present invention is used as being combined with a driving support system of the own vehicle, it is possible to drive the own vehicle more safely.

Here, the display property of the marking image includes color, thickness, brightness, and presence or absence of blinking or fluorescence. Accordingly, the driver can recognize a matter and a magnitude of the influence instantaneously and intuitively as visually detecting the influence by the object.

In another embodiment, the marking image represents an outline line of the object. Accordingly, it is possible to intuitively recognize an entity (i.e., what it is) and a size of the object and a feeling of distance.

In another embodiment, the object is a target preceding vehicle detected to be tailed by the own vehicle and the influence is a grade of a detection state of the target preceding vehicle. In a case that the own vehicle tails the preceding vehicle with automated driving, tailing travelling with automated driving can be performed if the detection state of the target preceding vehicle is excellent. However, if the detection state is not excellent, the tailing travelling is not possible and is cancelled. At that time, the driver can previously recognize cancellation of the tailing travelling before the automated driving system of the own vehicle cancels the tailing travelling and can be well prepared for switching to normal driving.

In another embodiment, the object is a travel environment to be recognized in front of the own vehicle and the influence is a risk with respect to travelling of the own vehicle. Accordingly, the driver can recognize, in real time instantaneously and intuitively, whether or not the own vehicle can travel safely in the travel environment in front of the own vehicle and a degree of the risk. Owing to that the vehicle-use image display system of the present invention is used as being combined with a driving support system of the own vehicle, it is possible to drive the own vehicle more safely.

Here, the travel environment may include one or more of another vehicle and a pedestrian on and/or around a road, a road boundary, a road display for such as a lane and a crosswalk, a road appendage, an obstacle on a road, and an animal. Accordingly, the driver can recognize a matter and a magnitude of the influence instantaneously and intuitively as visually detecting the risk of the object in the travel environment in front of the own vehicle.

In another aspect of the present invention, a vehicle-use image display method of the present invention is a method for supporting driving of an own vehicle by causing a display device that uses a front windshield of the own vehicle for screen displaying to perform image displaying of an object detected in front of the own vehicle. Here, the image displaying is controlled so that a marking image having a shape corresponding to an outline of the object is superimposed to the object actually existing in actual scenery viewed through the front windshield, and so that a displaying property of the marking image is adjusted and varied in accordance with possible influence to be caused by the object to a drive behavior of the own vehicle.

Owing to that screen displaying at the front windshield is controlled so that the displaying property of the marking image is adjusted and varied in accordance with the influence to be caused by the object as described above, a driver of the own vehicle can previously recognize possible influence to driving of the own vehicle to be caused by the object existing in real time in front of the own vehicle and a magnitude of the influence. Then, owing to that the vehicle-use image display method of the present invention is used as being combined with a driving support system of the own vehicle, it is possible to drive the own vehicle more safely.

In another embodiment, the display property of the marking image is adjusted and varied further in accordance with a category of the object. Accordingly, the driver of the own vehicle can recognize the entity of the object easily, instantaneously, and intuitively.

Here, the display property of the marking image includes color, thickness, brightness, and presence or absence of blinking or fluorescence. Accordingly, the driver can recognize a matter and a magnitude of the influence instantaneously and intuitively as visually detecting the influence by the object.

In another embodiment, the object is a target preceding vehicle detected to be tailed by the own vehicle and the influence is determined in accordance with a grade of a detection state of the target preceding vehicle. In a case that the own vehicle tails the preceding vehicle with automated driving, tailing travelling with automated driving can be performed if the detection state of the target preceding vehicle is excellent. However, if the detection state is not excellent, the tailing travelling is not possible and is cancelled. At that time, the driver can previously recognize cancellation of the tailing travelling before the automated driving system of the own vehicle cancels the tailing travelling and can be well prepared for switching to normal driving.

In another embodiment, the object is a travel environment to be recognized in front of the own vehicle and the influence is determined based on a risk with respect to travelling of the own vehicle. Accordingly, the driver can recognize, in real time instantaneously and intuitively, whether or not the own vehicle can travel safely in the travel environment in front of the own vehicle and a degree of the risk. Owing to that the vehicle-use image display method of the present invention is used as being combined with a driving support system of the own vehicle, it is possible to drive the own vehicle more safely.

Here, the travel environment includes one or more of another vehicle and a pedestrian on and/or around a road, a road boundary, a road display for such as a lane and a crosswalk, a road appendage, an obstacle on a road, and an animal. Accordingly, the driver can recognize a matter and a magnitude of the influence instantaneously and intuitively as visually detecting the risk of the object in the travel environment in front of the own vehicle.

### BRIEF DESCRIPTION OF THE DRAWINGS

FIG. 1 is a block diagram illustrating an entire configuration of a driving support system in which a vehicle-use image display system of the present invention is combined with a constant-speed and inter-vehicular-distance control system.
FIG. 2 is a plane view illustrating an example of an automobile on which cameras and sensors are mounted for actualizing the present invention.
FIG. 3 is a schematic view viewing, from a driver's seat side, a front windshield and an upper part of a dashboard of the automobile on which the vehicle-use image display system of the present invention is mounted.
FIGs. 4A and 4B are views each illustrating screen displaying at the front windshield.
FIGs. 5A to 5C are views each illustrating other screen displaying at the front windshield.
FIG. 6 is a block diagram illustrating an entire configuration of a driving support system in which a vehicle-use image display system of the present invention is combined with a travel environment recognition system.
FIG. 7 is an explanatory view illustrating a typical example of vehicle-to-vehicle communication and road-to-vehicle communication.
FIG. 8A is an explanatory view illustrating actual scenery viewed through the front windshield and FIG. 8B is an explanatory view illustrating screen displaying that is superimposed to the actual scenery.
FIG. 9A is an explanatory view illustrating other actual scenery viewed through the front windshield and FIG. 9B is an explanatory view illustrating screen displaying that is superimposed to the actual scenery.
FIG. 10A is an explanatory view illustrating other actual scenery viewed through the front windshield and FIG. 10B is an explanatory view illustrating screen displaying that is superimposed to the actual scenery.
FIG. 11A is an explanatory view illustrating other actual scenery viewed through the front windshield and FIG. 11B is an explanatory view illustrating screen displaying that is superimposed to the actual scenery.

### EMBODIMENTS OF THE INVENTION

In the following, preferable embodiments of the present invention will be described with reference to the attached drawings. In the attached drawings, the same or similar reference is given to the same or similar structural element.

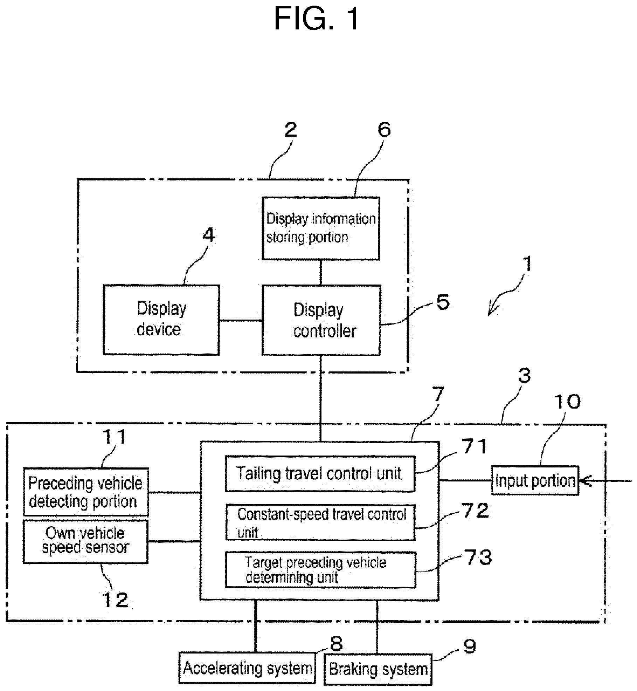

FIG. 1 schematically illustrates an entire configuration of a driving support system in which a vehicle-use image display system of an embodiment is combined with an ACC system. As illustrated in FIG. 1, the driving support system 1 includes a vehicle-use image display system 2 and an ACC system 3 connected thereto. The vehicle-use image display system 2 includes a display device 4 that uses a front windshield of an automobile for screen displaying, a display controller 5, and a display information storing portion 6. Further, the vehicle-use image display system 2 may include a monitor device mounted in or on a dashboard of the automobile as an auxiliary display device.

The ACC system 3 includes an ACC controller 7 configured of a micro-computer including a CPU, a ROM, and a RAM for performing constant-speed and inter-vehicular-distance control. The ACC controller 7 includes a tailing travel control unit 71, a constant-speed travel control unit 72, and a target preceding vehicle determining unit 73. The tailing travel control unit 71 executes a tailing travel mode in which an own vehicle is caused to follow a preceding vehicle while an actual inter-vehicular distance against the preceding vehicle is kept at a previously-set inter-vehicular distance. The constant-speed travel control unit 72 executes a constant speed travel mode in which the own vehicle is caused to travel at a previously-set speed. The target preceding vehicle determining unit 73 determines a preceding vehicle that is to be a target in the tailing travel mode.

The ACC controller 7 is connected to an accelerating system 8 and a braking system 9 of the automobile and the display controller 5 of the vehicle-use image display system 2. In general, the accelerating system 8 performs a function to start moving of an automobile as increasing revolution of an engine and shifting gears and to increase or maintain a speed of the automobile. The braking system 9 performs a function to decrease speed or stop moving of an automobile as decreasing revolution of the engine and shifting gears.

The ACC controller 7 is further connected to an input portion 10, a preceding vehicle detecting portion 11, and an own vehicle speed sensor 12. The input portion 10 is used for a driver of the own vehicle to perform ON-OFF switching of the adaptive cruise control and inputting desired settings. The preceding vehicle detecting portion 11 detects, using a later-mentioned radar sensor arranged at the front side, an inter-vehicular distance, a relative speed, a direction with respect to an orientation of the own vehicle, and the like with respect to another vehicle travelling ahead. The own vehicle speed sensor 12 is for detecting a speed of the own vehicle as being arranged, for example, at a wheel.

In the vehicle-use image display system 2 of the present embodiment, image displaying at the display device 4 is controlled by the display controller 5. The display controller 5 displays necessary images on a screen of the display device 4 based on directions and information received from the ACC controller 7 of the ACC system 3. A data file of a variety of display patterns of images to be displayed at the display device 4 and programs of a displaying method and the like are stored in advance at the display information storing portion 6.

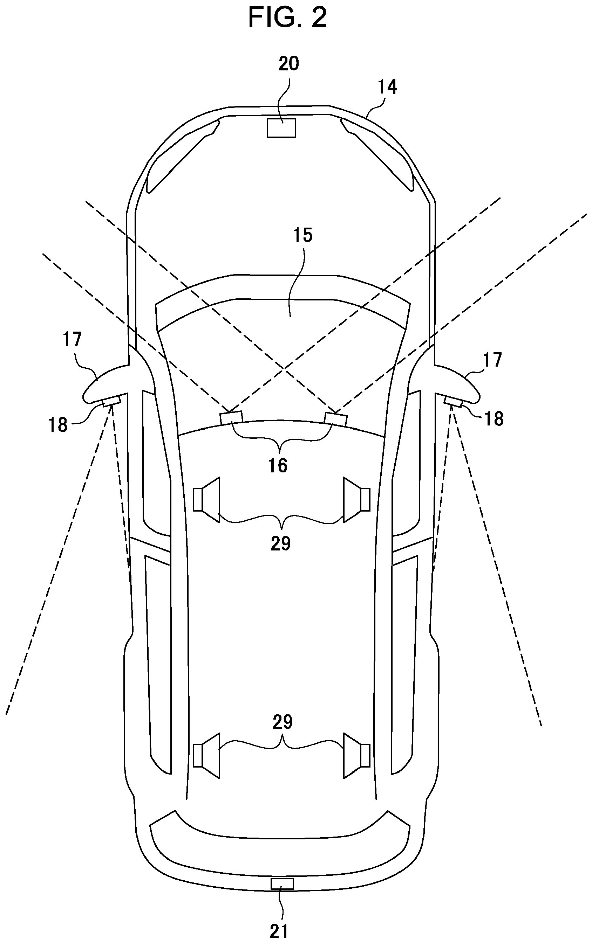

FIG. 2 schematically exemplifies an automobile 14 on which the driving support system 1 is mounted. The automobile 14 includes several cameras and sensors for detecting objects existing around the own vehicle. A right-left pair of front cameras 16, 16 are arranged at an upper section of the front windshield 15 of the automobile 14 for recognizing an object at each of the center, right, and left in front of the automobile 14. A pair of rear cameras 18, 18 are arranged at lower sections of right-left door mirrors 17, 17 for recognizing an object at the lateral rear. Further, a center rear camera (not illustrated) may be arranged at an upper center section of a rear windshield 19. In another embodiment, it is also possible to arrange an all-direction camera system by adding another camera to the cameras described above.

Further, the automobile 14 includes a radar sensor 20 at the front side arranged at the center of a front section (e.g., at a radiator grill, under a hood, or in a front bumper) for detecting an object at the center front and a radar sensor 21 at the rear side arranged at the center of a rear section (e.g., under a rear panel or in a rear bumper) for detecting an object at the center rear. Such radar sensors may be selected from a millimeter-wave radar sensor, a micrometer radar sensor, an infrared radiation sensor, an ultrasonic sensor, or the like, for example.

In particular, it is preferable that the radar sensor 20 at the front side adopts two kinds of millimeter-wave radar sensors for middle-range-use and short-range-use. Here, it is preferable that a right-left pair of sensors are adopted as the radar sensor for short-range-use. When millimeter-wave radar sensors are adopted as the radar sensor 20 at the front side, it is possible to promptly recognize situation change as being close to or away from a preceding vehicle as well as an inter-vehicular distance against the preceding vehicle and a relative speed and a positional relation (orientation) with respect to the own vehicle. Thus, the millimeter-wave radar sensors are preferable to be adopted as being suitable for automatic tailing. Further, millimeter-wave radars are advantageous in detection capability as being less influenced by adverse weather such as rain, snow and fog or low visibility environment such as night-time and further advantageous in that the detection distance is long as being about 200 meters.

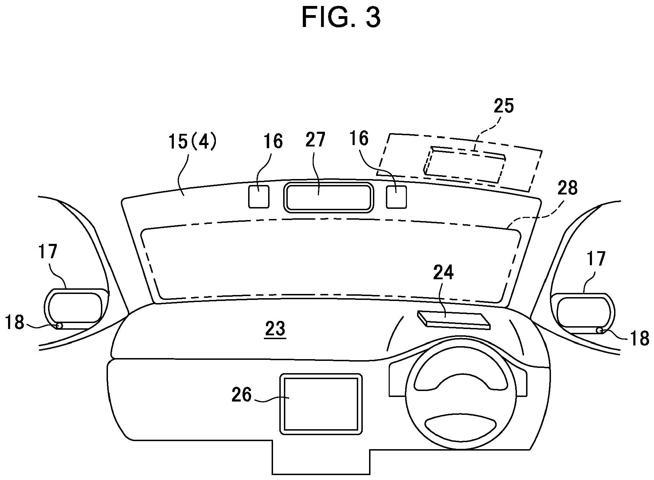

FIG. 3 schematically illustrates, as viewing from a driver's seat side, the front windshield 15 and an upper section of the dashboard 23 of an automobile on which the vehicle-use image display system 2 is mounted. A head-up display (HUD) device 24 is arranged at the upper section of the dashboard 23 as the display device 4 to project an image on the front windshield 15. The HUD device 24 may be assembled in the dashboard 23. Alternatively, the HUD device may be arranged on an upper face of the dashboard 23 or at a position of a sun visor 25 at a ceiling of a driver's seat. Further, the HUD device may be arranged so that the projecting can be performed from a plurality of positions of the abovementioned and/or others.

HUD devices having a variety of structures are developed and used, such as a type in which a front windshield functions as a screen and a type in which a display image is projected onto a transparent screen arranged between a front windshield and eyes of an occupant or arranged on a surface of a front windshield. An HUD device of the present invention may have any structure and any configuration that have been known.

A monitor device 26 as the auxiliary display device is integrally assembled in the dashboard 23 (i.e., in-dash) approximately at the front center of the dashboard 23. The monitor device may be attached on the dashboard 23 (i.e., on-dash). Further, a rearview mirror 27 attached at the upper center of the front windshield 15 may function as another auxiliary display device of the vehicle-use image display system 2.

The entire surface or a part of the front windshield 15 is used as the display device 4. For example, as illustrated in FIG. 3, a wide view area including a center section of the front windshield 15 may be defined as a display area 28 to project an image that is superimposed to actual scenery viewed through the front windshield 15. Naturally, the display area 28 is not limited to a position, a size, or a range illustrated in FIG. 3.

Areas of the front windshield 15 in and/or around the display area 28 may be used for projecting rear view pictures taken by the right-left rear cameras 18, 18 or processed images thereof. Further, it is also possible to display, at the rearview mirror 27 and/or the monitor device 26, a processed image of an object detected by the radar sensor 21, a picture taken by the center rear camera or a processed image thereof.

Next, description will be provided on constant-speed and inter-vehicular-distance control of an automobile according to the ACC system 3. The constant-speed and inter-vehicular-distance control of the present embodiment is performed as described below, for example. Naturally, the control is not limited thereto.

When a driver turns on an ACC switch (not illustrated), the ACC controller 7 starts constant-speed and inter-vehicular-distance control of the own vehicle. The speed for constant speed travelling and an inter-vehicular distance against a preceding vehicle may be set by inputting specific values to the input portion 10 just before the driver turns on the ACC switch or may be used a set value of the last time stored in a memory of the ACC system 3 as it is. The constant-speed and inter-vehicular-distance control is performed as being switched between the tailing travel mode when a preceding vehicle is detected and the constant speed travel mode when a preceding vehicle is not detected.

First, the preceding vehicle detecting portion 11 detects all other vehicles preceding ahead using the radar sensor 20 at the front side. The preceding vehicle detecting portion 11 detects inter-vehicular distances and relative speeds with respect to all the detected preceding vehicles, orientations thereof with respect to the own vehicle, and the like in a memory. Then, the preceding vehicle detecting portion 11 determines, as a target preceding vehicle for tailing travelling, a vehicle being closest to the own vehicle among the preceding vehicles traveling on the same lane as the own vehicle. Determination of the target preceding vehicle is notified to the ACC controller 7 along with data such as a positional relation and a relative speed of the target preceding vehicle detected by the preceding vehicle detecting portion 11.

It is preferable that the radar sensor 20 constantly performs scanning regardless of whether the ACC switch is kept on or off. Owing to the above, determining the target preceding vehicle can be promptly performed with respect to turning-on operation of the ACC switch and detection of the preceding vehicle can be used for a rear-end collision preventing function.

In the present embodiment, owing to that the preceding vehicle detecting portion 11 adopts the pair of front cameras 16, 16 in conjunction with the radar sensor 20, positional information of the detected preceding vehicles can be obtained more accurately. In particular, according to the front cameras 16, 16, rear shapes of the preceding vehicles can be detected with high accuracy in addition to the positions thereof.

It is also possible to obtain positional information and/or travel situations of the preceding vehicles through Near Field Communication with the preceding vehicles. Owing to that such information obtained through so-called vehicle-to-vehicle communication with the preceding vehicles is added to the detection result obtained by the radar sensor 20 and the front cameras 16, 16, it is possible for the preceding vehicle detecting portion 11 to further improve accuracy of the positional information of the preceding vehicles.

It is also possible to obtain positional information and/or travel situations of the preceding vehicles through so-called road-to-vehicle communication in which radio communication is performed, directly or through servers located in surrounding areas, with communication devices such as sensors and antennas mounted on roads. For performing such vehicle-to-vehicle communication and/or road-to-vehicle communication, it is preferable that the ACC system 3 or the driving support system 1 includes a communication device for communicating with the outside.

In the tailing travel mode, the ACC controller 7 controls the accelerating system 8 and the braking system 9 so as to keep the inter-vehicular distance against the determined target preceding vehicle at the set inter-vehicular distance. That is, when a current actual inter-vehicular distance against the target preceding vehicle is longer than the set inter-vehicular distance, the accelerating system 8 is controlled to shorten the inter-vehicular distance against the target preceding vehicle as increasing the speed of the own vehicle. When the current actual inter-vehicular distance against the target preceding vehicle is shorter than the set inter-vehicular distance, the braking system 9 is controlled to lengthen the inter-vehicular distance against the target preceding vehicle as decreasing the speed of the own vehicle. When the current actual inter-vehicular distance against the target preceding vehicle is the same as the set inter-vehicular distance, the accelerating system 8 and/or the braking system 9 are controlled to keep the current speed of the own vehicle.

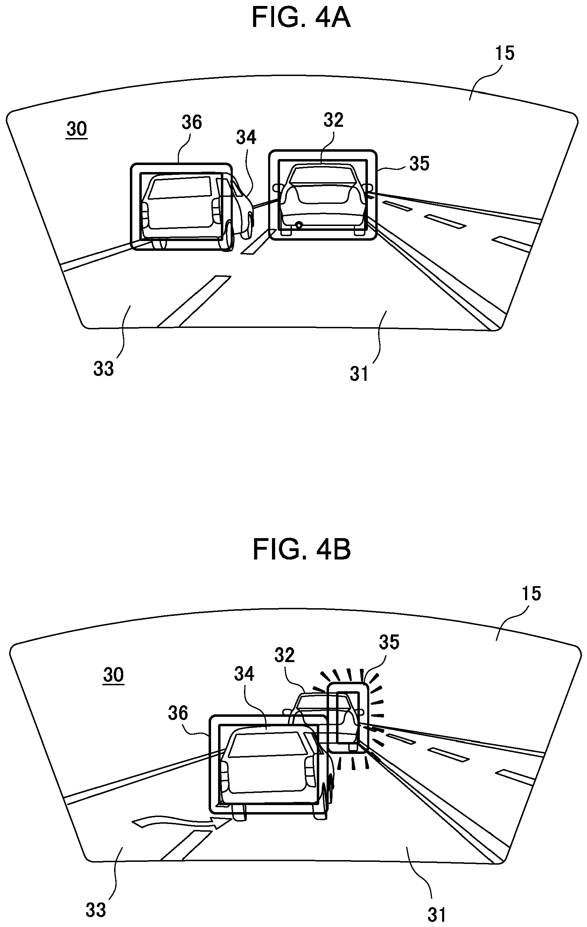

FIG. 4A illustrates an example of screen displaying at the display device 4 in the tailing travel mode. On a road of an actual scenery 30 viewed through the front windshield 15, in front of the own vehicle, a preceding vehicle 32 is travelling on the same overtaking lane 31 as the own vehicle and another preceding vehicle 34 is travelling on the next lane 33. In such a case, the preceding vehicle detecting portion 11 detects both the preceding vehicles 32, 34 by performing scanning with the radar sensor 20 and determines, as the target preceding vehicle, the preceding vehicle 32 that is closest to the own vehicle on the same lane 31 as the own vehicle.

The preceding vehicle detecting portion 11 stores detected data such as the inter-vehicular distance, the relative speed, and the orientation with respect to the target preceding vehicle 32 in a memory thereof and transmits the data to the ACC controller 7 along with the determination of the target preceding vehicle 32. Further, the preceding vehicle detecting portion 11 performs automatic tailing to the target preceding vehicle 32 while performing continuous scanning with the radar sensor 20. Thus, the preceding vehicle detecting portion 11 continuously collects and stores the data such as the inter-vehicular distance, the relative speed, and the orientation with respect thereto and provides the data to the ACC controller 7.

When receiving notification of target preceding vehicle determination from the preceding vehicle detecting portion 11, the ACC controller 7 instructs the display controller 5 of the vehicle-use image display system 2 to display a marking image that indicates the target preceding vehicle. At the same time, the ACC controller 7 starts to transmit, to the display controller 5, positional information of the target preceding vehicle 32 provided from the preceding vehicle detecting portion 11 without substantial time delay.

As illustrated in FIG. 4A, the display device 4 of the vehicle-use image display system 2 displays a marking image 35 that indicates the target preceding vehicle as superimposing the marking image 35 to the preceding vehicle 32 viewed through the front windshield 15. The display controller 5 performs processing on the image data obtained from the display information storing portion 6 based on the information of the target preceding vehicle 32 provided from the preceding vehicle detecting portion 11 and causes the marking image 35 to be displayed at a display area on the front windshield 15 through the HUD device 24. Displaying of the marking image 35 is continuously performed while the ACC system 3 executes the tailing travel mode without losing sight of the target preceding vehicle 32.

As illustrated in FIG. 4A, the marking image 35 in the present embodiment is formed of an approximately rectangular thick-frame line to surround an outline of the target preceding vehicle 32. Other than such a rectangular thick-frame line, the marking image 35 may be formed variously in shape and displaying. For example, the marking image 35 may be formed of a round thick-frame line or an oval thick-frame line with an upper part eliminated to surround a lower part of a vehicle body from a road face side. Further, the marking image 35 may be displayed in a striking color such as red and orange for calling attention of a driver.

When the radar sensor 20 and the front cameras 16, 16 are used jointly, the positional information of the target preceding vehicle 32 provided to the display controller 5 from the preceding vehicle detecting portion 11 through the ACC controller 7 can include more accurate data with respect to shape and size of the target preceding vehicle as viewed from the behind thereof. Accordingly, in addition to being simply positioned to the target preceding vehicle 32 with high accuracy in the actual scenery 30, the marking image 35 can be displayed as being processed to be matched more closely to the outline of the target preceding vehicle 32. In a case that the front cameras 16, 16 cannot sufficiently capture the target preceding vehicle 32 owing to too-large distance from the own vehicle to the target preceding vehicle 32 or bad weather, it is also possible to detect the rear shape and size of the preceding vehicle, for example, by radiating radar waves of the radar sensor 20 while changing a depression direction or an elevation direction.

During normal travelling in the tailing travel mode, the marking image 35 may be displayed with display properties such as a shape, a size, and a color changed in accordance with travel situations of the target preceding vehicle 32, a positional relation therewith, and the like. For example, when the target preceding vehicle 32 rapidly accelerates and the inter-vehicular distance thereagainst starts to rapidly increase or becomes larger than the set inter-vehicular distance by a specific value, the ACC controller 7 controls the accelerating system 8 to accelerate the own vehicle so that the inter-vehicular distance against the target preceding vehicle 32 returns to or comes close to the set inter-vehicular distance.

At that time, it is possible to inform a driver of that the inter-vehicular distance against the target preceding vehicle 32 is becoming large and the own vehicle is to be accelerated in accordance therewith, for example, by changing the color of the marking image 35 to a striking color (e.g., from yellow to red or orange), enlarging thickness of the frame line, changing the frame shape, displaying with blinking and/or fluorescence, enhancing luminance, or dynamically changing display properties of the above and others. The ACC controller 7 instructs the display controller 5 to perform such changing of the marking image 35 at the same time when instructing the accelerating system 8 to perform acceleration. Then, the display controller 5 performs the changing based on change of the positional information or the target preceding vehicle 32 transmitted from the ACC controller 7.

On the contrary, when the target preceding vehicle 32 rapidly decelerates and the inter-vehicular distance thereagainst starts to rapidly decrease and becomes smaller than the set inter-vehicular distance by a specific value, the ACC controller controls the braking system 9 to decelerate the own vehicle so that the inter-vehicular distance against the target preceding vehicle 32 returns to or comes close to the set inter-vehicular distance. Similarly at that time, it is possible to inform the driver of that the inter-vehicular distance against the target preceding vehicle 32 is becoming small and the own vehicle is to be decelerated in accordance therewith owing to that the color and the display properties such as displaying with blinking and/or fluorescence are changed based on the instruction of the ACC controller 7 to the display controller 5.

In the present embodiment, as illustrated in FIG. 4A, a marking image 36 indicating that a preceding vehicle 34 that is not a target preceding vehicle is detected by the preceding vehicle detecting portion 11 is also displayed as being superimposed to the preceding vehicle 34 viewed through the front windshield 15. Similarly to the above, although the marking image 36 is formed of an approximately rectangular thick-frame line surrounding an outline of the preceding vehicle 34, it is not limited thereto. Here, it is preferable that the marking image 36 is displayed differently in shape, thickness, or color to be clearly distinguishable at a glance from the marking image 35 of the target preceding vehicle 32.

Similarly to the positional information of the target preceding vehicle 32, positional information of the preceding vehicle 34 with the marking image 36 displayed is stored in the memory of the preceding vehicle detecting portion 11 and provided to the ACC controller 7. The ACC controller 7 instructs the display controller 5 of the vehicle-use image display system 2 to display the marking image 36 as the positional information of a preceding vehicle that is not the target preceding vehicle 32. The display controller 5 performs processing on the image data obtained from the display information storing portion 6 based on the positional information of the preceding vehicle 34 received from the preceding vehicle detecting portion 11 and causes the marking image 36 to be displayed at the front wind shield 15 through the HUD device 24.

Then, as long as the preceding vehicle 34 is detected by the radar sensor 20, the positional information thereof is continuously collected and stored by the preceding vehicle detecting portion 11 and is provided to the ACC controller 7. It may not be necessary to continuously display the marking image 36 that does not indicate the target preceding vehicle. In such as case, the marking image 36 may be eliminated after being displayed when the preceding vehicle 34 is firstly detected, and then, may be displayed only for a short period of time, for example, at constant intervals as long as the preceding vehicle 34 continuously exists in front of the own vehicle. Further, also in a case that another vehicle travelling on a cruising lane 33 appears in front of the own vehicle, when the vehicle is detected by the radar sensor 20, positional information thereof is collected and stored by the preceding vehicle detecting portion 11 and another marking image 36 is displayed at the display device 4 through the ACC controller 7.

In a case that the preceding vehicle detecting portion 11 loses sight of the target preceding vehicle and any preceding vehicle does not exist at least within a range of the set inter-vehicular distance on the lane on which the own vehicle travels, the ACC controller 7 switches the mode from the tailing travel mode to the constant speed travel mode and controls the accelerating system 8 and the braking system 9. That is, the ACC controller 7 controls the braking system 9 to perform decelerating toward the set speed when a current speed of the own vehicle is faster than the set speed, controls the accelerating system 8 to perform accelerating toward the set speed when the current speed is slower than the set speed, and controls the accelerating system 8 and/or the braking system 9 to keep the current speed when the current speed is the same as the set speed.

In a case that the preceding vehicle detecting portion 11 loses sight of the target preceding vehicle and another preceding vehicle exists within the range of the set inter-vehicular distance on the lane on which the own vehicle travels, the ACC controller 7 cancels the constant-speed and inter-vehicular-distance control without switching the mode from the tailing travel mode to the constant speed travel mode to prevent collision with the other preceding vehicle. In this case, the driver is required to immediately perform completely manual driving.

Such switching from the tailing travel mode to the constant speed travel mode and cancelling of the constant-speed and inter-vehicular-distance control due to losing sight of the target preceding vehicle may cause the driver to have a feeling of strangeness and to be astonished causing influence to safe driving of the own vehicle. Accordingly, it is preferable to cause the driver to recognize a possibility of losing sight of the target preceding vehicle before completely losing the target preceding vehicle.

For example, in the travel situation of FIG. 4A, there may be a case that the preceding vehicle detecting portion 11 loses sight of the target preceding vehicle 32 when the preceding vehicle 34 enters between the target preceding vehicle 32 and the own vehicle from the cruising lane 33. FIG. 4B illustrates an example of screen displaying at the display device 4 in such a case.

As the preceding vehicle 34 moves onto the overtaking lane 31, a scope or a section of the target preceding vehicle 32 visible from a driver's seat of the own vehicle becomes small as being behind the preceding vehicle 34. Approximately in accordance therewith, a scope or section of the target preceding vehicle 32 capable of being detected by the preceding vehicle detecting portion 11 becomes small. Accordingly, the marking image 35 is displayed as being processed small to be matched to the shape and size thereof. When the target preceding vehicle 32 becomes invisible as being completely ahead of the preceding vehicle 34, the marking image 35 is eliminated. Meanwhile, the marking image 36 is kept displayed at the preceding vehicle 34 to indicate that existence thereof is detected by the preceding vehicle detecting portion 11.

For causing the driver to clearly recognize that the marking image 35 is to be eliminated as becoming small, that is, sight of the target preceding vehicle 32 is to be lost, it is preferable, for example, that the color of the frame line is changed to a striking color, the thickness thereof is enlarged, the luminance thereof is enhanced, or blinking and/or fluorescence is adopted for displaying. For example, displaying is performed normally in blue-series color or green-series color that apt to provide a sense of ease to a driver and another occupant. Then, the color may be changed, for example, to yellow, orange, and red sequentially in accordance with a decreasing ratio of area of the rectangular frame of the marking image 35.

In another embodiment, these variations may be combined and display properties of the above and others may be dynamically changed. According to the above, the driver can previously recognize a possibility of losing sight of the target preceding vehicle 32, a degree thereof, switching from the tailing travel mode to the constant speed travel mode thereby, or cancelling of the constant-speed and inter-vehicular-distance control and can make preparation to be ready thereto promptly without panic.

When the preceding vehicle detecting portion 11 loses sight of the target preceding vehicle 32, the fact thereof is transmitted to the display controller 5 through the ACC controller 7. Then, the marking image 35 is eliminated from the display device 4, that is, the front windshield 15. Here, in a case that the entered preceding vehicle 34 travels on the overtaking lane 31 on which the own vehicle travels and the ACC controller 7 cancels the constant-speed and inter-vehicular-distance control, the preceding vehicle detecting portion 11 continues to detect the preceding vehicle 34 simply as a preceding vehicle to the extent possible and stores the positional information in the memory thereof unless the driver turns on the ACC switch. The positional information is provided to the display controller 5 through the ACC controller 7 and the marking image 36 is appropriately displayed at the preceding vehicle 34.

When the driver turns on the ACC switch again after the ACC controller 7 cancels the constant-speed and inter-vehicular-distance control, the target preceding vehicle determining unit 73 of the ACC controller 7 determines the preceding vehicle 34 as a new target preceding vehicle if the preceding vehicle 34 is the closest preceding vehicle on the overtaking lane 31. Then, the ACC controller 7 instructs the display controller 5 to display a marking image indicating the target preceding vehicle on the preceding vehicle 34 at the same time when the ACC controller 7 starts controlling of the accelerating system 8 and the braking system 9 in the tailing travel mode. Thus, instead of the marking image 36, the marking image 35 is displayed at the preceding vehicle 34.

There may be a case that the preceding vehicle detecting portion 11 continuously detects the target preceding vehicle 32 without completely losing sight thereof even after the preceding vehicle 34 enters space in front of the own vehicle. In such as case, when the tailing travelling with respect to the target preceding vehicle 32 is continued, there is a risk of collision with the preceding vehicle 34 if there is not a sufficient inter-vehicular distance between the own vehicle and the preceding vehicle 34. Accordingly, it is preferable that the constant-speed and inter-vehicular-distance control is cancelled automatically by the ACC controller 7 or manually by the driver.

In this case, the target preceding vehicle 32 becomes a preceding vehicle that is not a target for tailing travelling. Accordingly, even when the preceding vehicle 32 is still detected by the preceding vehicle detecting portion 11, the marking image 35 is eliminated from the screen displaying of the display device 4, that is, the front windshield 15 based on a notification from the ACC controller 7. Here, as long as the preceding vehicle detection portion 11 continuously detects the preceding vehicle 32, the positional information thereof is stored in the memory and provided to the display controller 5 through the ACC controller 7, so that the marking image 36 may be appropriately displayed at the preceding vehicle 32.

When the driver turns on the ACC switch again after the constant-speed and inter-vehicular-distance control is cancelled, the target preceding vehicle determining unit 73 of the ACC controller 7 determines the preceding vehicle 34 as a new target preceding vehicle if the preceding vehicle 34 is the closest preceding vehicle on the overtaking lane 31 on which the own vehicle travels. Then, the ACC controller 7 instructs the display controller 5 to display a marking image indicating the target preceding vehicle on the preceding vehicle 34 at the same time when the ACC controller 7 starts controlling of the accelerating system 8 and the braking system 9 in the tailing travel mode. Thus, instead of the marking image 36, the marking image 35 is displayed at the preceding vehicle 34.

When the preceding vehicle 34 moves out from the overtaking lane 31 after the constant-speed and inter-vehicular-distance control is cancelled and the preceding vehicle 32 becomes again to the closest preceding vehicle on the overtaking lane 31 on which the own vehicle travels, the ACC controller 7 can cause the preceding vehicle 32 to return to the target preceding vehicle owing to that the ACC switch is turned on by the driver as long as the preceding vehicle 32 has been continuously detected by the preceding vehicle detecting portion 11 by that time. Then, the display controller 5 causes the marking image 35 to be displayed again at the preceding vehicle 32 based on an instruction from the ACC controller 7.

Concurrently with the screen displaying at the display device 4, screen displaying may be performed as well at the monitor device 26 that is the auxiliary display device of the image display system 2. Here, the actual scenery at the display device 4 is replaced by a taken scenery in front of the own vehicle being a moving image in real time taken by the front cameras 16, 16 to be displayed. Since the scenery in front of the travelling own vehicle can be taken by the front cameras 16, 16 with high accuracy, it is relatively easy to display marking images, that are similar to the marking images 35, 36 at the display device 4, on the taken scenery with high accuracy.

Other than the marking images, a variety of information regarding the constant-speed and inter-vehicular-distance control under operation can be displayed on the screen of the monitor device 26. For example, such information includes the travel mode under operation (the tailing travel mode or the constant speed travel mode), the set inter-vehicular distance, the set speed, a measured inter-vehicular distance against a target preceding vehicle, an estimated speed of the target preceding vehicle, display blinking for lock-on of a preceding vehicle and sight-losing of the target preceding vehicle with the preceding vehicle detecting portion 11, and the like. Such information may be displayed at the front windshield 15 with the display device 4. Here, it is preferable that the information that may disturb driving for a driver is displayed at the display device 26 in an auxiliary manner.

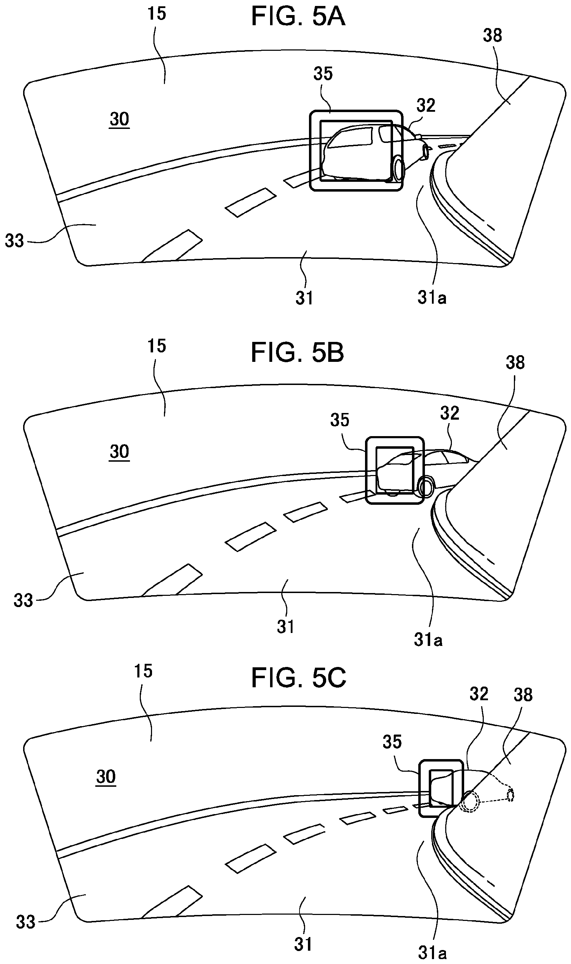

As another example of losing sight of the target preceding vehicle 32 during travelling under the constant-speed and inter-vehicular-distance control, there is a case that an obstacle such as a terrain object and a building that restricts front visibility exists at an inner side of a tight curve of a road. FIGs. 5A to 5C exemplify variation of image displaying with the display device 4 in such a case.

In FIG. 5A, the target preceding vehicle 32 is about to proceed to a rightward tight curve 31 a on the overtaking lane 31. A slope 38 being a relatively steep gradient exists at the inner side of the curve 31 a. At this time, since the target preceding vehicle 32 has only started turning rightward along the curve 31 a, the entire vehicle body can be viewed. Accordingly, the preceding vehicle detecting portion 11 can clearly detect the entire rear section of the target preceding vehicle 32 and the normal marking image 35 indicating the target preceding vehicle is displayed at the front windshield 15, as being similar to FIG. 4A.

In FIG. 5B, the target preceding vehicle 32 has entered to the curve 31 a to some extent. The target preceding vehicle 32 turns rightward to a considerable extent and orientation of the vehicle body is largely changed. Here, the front section of the vehicle body is hidden behind the slope 38 at the inner side of the curve 31 a. Although the rear section of the vehicle body is still entirely visible, the vehicle body is oriented largely rightward. Accordingly, the rear section of the vehicle body becomes considerably smaller than that in FIG. 5A, so that the marking image 35 is displayed considerably small as corresponding thereto.

When the road continues to tightly curve rightward, the entire vehicle body of the target preceding vehicle 32 is substantially hidden behind the slope 38 at the inner side of the curve 31, as illustrated in FIG. 5C. In FIG. 5C, a slight part of the rear section of the vehicle body of the target preceding vehicle 32 is visible, so that the marking image 35 is displayed extremely small in a range of being detectable by the preceding vehicle detecting portion 11. Then, when the vehicle body of the target preceding vehicle 32 is completely hidden behind the slope 38, the marking image 35 is eliminated.

As described above with reference to FIGs. 4A and 4B, for causing the driver to clearly recognize that the marking image 35 is to be eliminated as becoming small, that is, sight of the target preceding vehicle 32 is to be lost, it is preferable, for example, that the color of the frame line is changed to a striking color, the thickness thereof is enlarged, the luminance thereof is enhanced, or blinking and/or fluorescence is adopted for displaying. For example, displaying is performed normally in blue-series color or green-series color that apt to provide a sense of ease to a driver and another occupant. Then, the color may be changed, for example, to yellow, orange, and red sequentially in accordance with a decreasing ratio of area of the rectangular frame of the marking image 35.

In another embodiment, these variations of the marking image 35 may be combined and display properties of the above and others may be dynamically changed. According to the above, the driver can previously recognize a possibility of losing sight of the target preceding vehicle 32, a degree thereof, switching from the tailing travel mode to the constant speed travel mode thereby, or cancelling of the constant-speed and inter-vehicular-distance control and can make preparation to be ready thereto promptly without panic. Here, since operations for the constant-speed and inter-vehicular-distance control after sight of the target preceding vehicle 32 is lost as described above is substantially the same as described above with reference to FIGs. 4A and 4B, detailed description thereof will be skipped.

By the way, owing to that the entered preceding vehicle 34 returns onto the original cruising lane or that an obstacle due to the tight curve 31 or the slope 38 disappears, there is a case that the lost sight of target preceding vehicle 32 returns to be visible in a relatively short period of time. In such a case, by comparing detection data such as a position, an inter-vehicular distance, and a speed thereof with the data stored in the own memory, the preceding vehicle detecting portion 11 or the ACC controller 7 can detect that the closest preceding vehicle travelling in front of the own vehicle on the same overtaking lane 31 is the target preceding vehicle 32 that has been just lost. When the target preceding vehicle 32 is recognized as described above, the ACC controller 7 can cause the target preceding vehicle 32 to be automatically revived as the target preceding vehicle in the tailing travel mode without automatically switching the mode to the constant speed travel mode or cancelling the constant-speed and inter-vehicular-distance control.

The marking image 35 is displayed again at the target preceding vehicle 32 that is revived as described above. At the time of revival displaying, owing to that the marking image 35 is displayed, for example, with blinking or fluorescence, or with dynamic variation in color or in other property, it is possible to cause the driver to clearly recognize that the mode is returned to the tailing travel mode without switching to the constant speed travel mode or cancelling of the constant-speed and inter-vehicular-distance control.

In an example being similar to the above, there is a case that the target preceding vehicle 32 performs lane change (e.g., from an overtaking lane to a cruising lane) or proceeds to an approach way from a main road and disappears from the front sight of the own vehicle. In such a case, operations of the constant-speed and inter-vehicular-distance control and displaying of the marking image 35 are substantially the same as the case described with reference to FIGs. 5A to 5C and detailed description will be skipped.

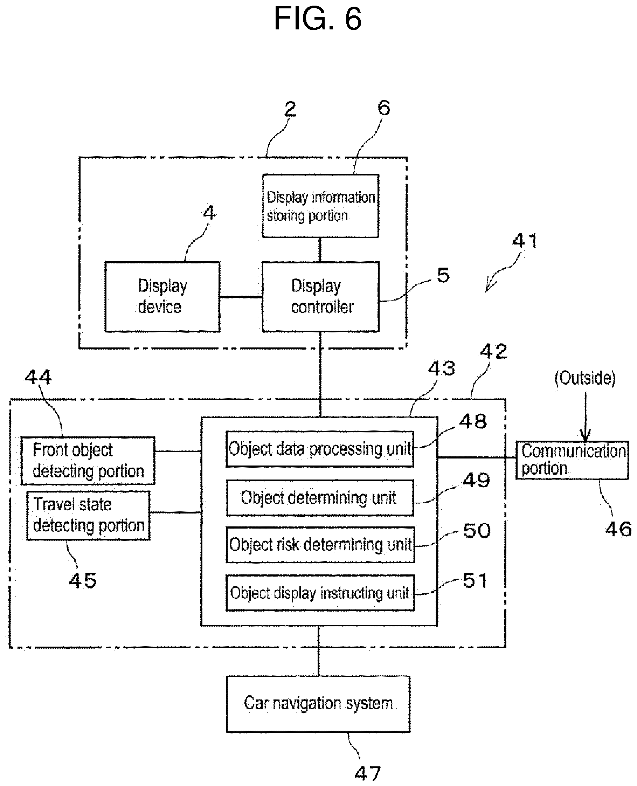

FIG. 6 schematically illustrates an entire configuration of a driving support system in which a vehicle-use image display system of a preferable embodiment of the present invention is combined with a travel environment recognition system. As illustrated in FIG. 6, a driving support system 41 includes a vehicle-use image display system 2 and a travel environment recognition system 42 that is connected thereto.

The vehicle-use image display system 2, being substantially the same as that in the driving support system 1 of FIG. 1, includes a display device 4 that uses a front windshield of an automobile for screen displaying, a display controller 5, and a display information storing portion 6. Further, the vehicle-use image display system 2 may include a monitor device mounted in or on a dashboard of the automobile as an auxiliary display device.

The travel environment recognition system 42 is an on-board system for automatically recognizing environmental situations in front of the travelling own vehicle and peripheries thereof and informing a driver of the environmental situations. The travel environment recognition system 42 includes a travel environment recognition controller 43 configured of a micro-computer including a CPU, a ROM, and a RAM. The travel environment recognition controller 43 is connected to a front object detecting portion 44, a travel state detecting portion 45, and a communication portion 46.

The front object detecting portion 44 has a function to detect objects in front of the own vehicle and to transmit the detected data to the travel environment recognition controller 43 as required. Accordingly, the front object detecting portion 44 is connected to the radar sensor 20, the front cameras 16, 16, and other cameras and sensors mounted on the own vehicle and receive data detected thereby in real time to be capable of detecting existence of an object. It is preferable that the radar sensor 20 includes an infrared sensor in addition to the abovementioned millimeter-wave radar sensor and the front cameras 16, 16 are infrared cameras, especially far-infrared cameras.

Here, in a broad sense, the object represents a preceding vehicle travelling in front of the own vehicle, a vehicle parking/stopping in front thereof, an oncoming vehicle approaching in an opposing direction, a surrounding vehicle traveling on a road or a lane connected to a lane on which the own vehicle travels, a pedestrian and an animal existing in front of or around the own vehicle, a boundary to a road on which the own vehicle travels (display for a lane and branching, a center median, a lane separation indicator, a road shoulder, a walking path, a crosswalk, a tunnel, a parking bay, or the like), a road appendage (a guardrail, a signal light, a road light, a direction board, a road sign, a power pole, a variety of poles, or the like), a building around a road, an obstacle on a road (a fallen object, a damaged vehicle, a collapsed object such as a fallen tree, a fallen rock, fallen soil, a sagged road, or the like), and the like. In a narrow sense, the object may represent only an object existing in a view sight through a front windshield of the own vehicle among the objects in the broad sense.

The travel state detecting portion 45 has a function to detect, from a variety of on-board sensors, a travel state of the own vehicle, that is, a speed, deceleration and acceleration, steering, orientation (a yaw rate), and the like and to transmit the detected data to the travel environment recognition controller 43. Accordingly, the travel state detecting portion 45 obtains data regarding a travel state of the own vehicle from a shift position sensor arranged at a steering system of the own vehicle, an engine rotation sensor arranged at an accelerating system, a brake sensor arranged at a braking system, a speed sensor arranged at a wheel, and the like.

Further, in a case that a car navigation system 47 is mounted on the own vehicle, the travel environment recognition controller 43 is capable of obtaining travel information such as a travel position, a travel route, and a destination from the car navigation system 47. The information provided from the car navigation system 47 may include a map around a currently located position of the own vehicle and route information such as road information and lanes.

The communication portion 46 has a function to perform transmitting and receiving through radio communication with the outside of the own vehicle and to provide obtained information to the travel environment recognition controller 43. The communication portion 46 can receive, through a global positioning system (GPS) device, signals and image data transmitted from a satellite orbiting around the earth to recognize, for example, a position of the own vehicle with high accuracy.

Further, the communication portion 46 can obtain, through so-called vehicle-to-vehicle communication in which Near Field Communication is performed directly with another vehicle that is travelling or parking/stopping around the own vehicle, a position, a route, and a travel state, and in some cases, a vehicle model name, a vehicle type, a vehicle shape, and the like of the other vehicle. Further, in addition to the travel situations of other vehicles, the communication portion 46 can obtain traffic information such as latest road situations and the like from communication equipment such as a variety of sensors and antennas arranged on or along roads directly or through so-called road-to-vehicle communication in which radio communication is performed through a server in a surrounding area, and/or through radio communication with a traffic information center via the internet or public broadcasting.

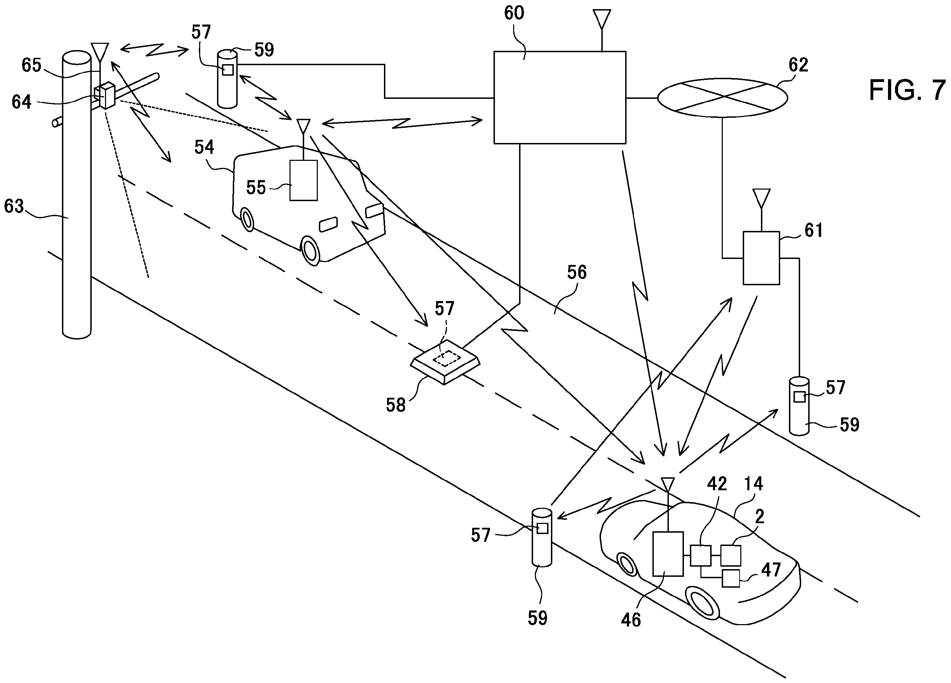

FIG. 7 schematically illustrates a typical example of vehicle-to-vehicle communication and road-to-vehicle communication. In FIG. 7, another vehicle 54 is provided with a communication portion 55 for performing Near Field Communication with the communication portion 46 of the driving support system 41 that is mounted on the own vehicle 14. According to the above, the own vehicle 14 and the other vehicle 54 can mutually perform exchange of information including image data regarding travel situations and traffic situations such as road situations therearound as needed, as long as both vehicles exist within a predetermined communication distance.

For example, communication chips 57 each formed of a chip-shaped communication device are arranged along a road 56 on which the own vehicle 14 travels. For example, the communication chips 57 may be may be buried at a road face or a road shoulder of the road 56 or may be attached to road tacks 58 arranged at a center line, a lane boundary line, or the like or a variety of poles 59 arranged along a road shoulder or a lane of a road.

In an embodiment, the communication chip 57 has a function to transmit, to the surroundings by radio, individual chip location information stored in an own memory. In this case, a nearby vehicle that has received the information can recognize location of the own vehicle. In another embodiment, the communication chip 57 has a function to perform transmitting and receiving of information by radio. The communication chip 57 can receive radio wave information transmitted by a vehicle passing nearby, and then, can transmit vehicle information, travel information, and the like of the vehicle included in the radio wave information to a server 60 (e.g., a cloud server) in a surrounding area directly through a cable or by radio through a relay center 61 that is connected through a cable or by radio. The server 60 distributes the travel information and the like of the vehicle received from the communication chip 57 by radio directly or through the internet 62 to the nearby vehicles.

Further, a sensor device 64 configured, for example, of a radar sensor, an infrared camera, or the like may be arranged along with a communication device 65 at an upper part of the pole 63 that is arranged beside a road. The sensor device 64 detects road situations, traffic situations of travelling vehicles, and the like from the upper part of the pole 63 and transmits the information in real time to the server 60 using the communication device 65. Similarly to the above, the server 60 distributes the traffic information obtained from the sensor device 64 by radio directly or through the internet 62 to the nearby vehicles.

The vehicle-to-vehicle communication and the road-to-vehicle communication illustrated in FIG. 7 are simply examples and the present invention is not limited to the configuration illustrated in FIG. 7. In the vehicle-to-vehicle communication and the road-to-vehicle communication to be adopted in the present invention, it is possible to variously modify sensors, communication devices, equipment, arrangement thereof, and entire configuration.

The travel environment recognition controller 43 includes an object data processing unit 48, an object determining unit 49, an object risk determining unit 50, and an object display instructing unit 51. The object data processing unit 48 performs, in real time, processing on detection data that is received by the front object detecting portion 44 from the radar sensor 20, the front cameras 16, 16, and other cameras and sensors mounted on the own vehicle to be capable of determining objects existing in front of and around the own vehicle. Further, the object data processing unit 48 performs processing on traffic information around the own vehicle obtained from the outside through the vehicle-to-vehicle communion and the road-to-vehicle communication via the communication portion 46 similarly to be used for determining objects existing in front of and around the own vehicle.

The data processed by the object data processing unit 48 is transferred immediately to the object determining unit 49. First, the object determining unit 49 recognizes and determines, with use of the received data, an outline and a position of each of the objects existing in front of and around the own vehicle. The outline and position of an object to be recognized and determined also include continuous variations (motion, deformation, and the like) in real time.

Here, the position of the object includes both of a relative position with respect to the own vehicle based on the data detected by the sensors and cameras mounted on the own vehicle and a geographical position based on the data obtained from the outside through the communication portion 46. The object data processing unit 48 can calculate a display position for displaying the object at the display device 4 being the front windshield 15 of the own vehicle 14 through processing on a mutual relation between the relative position and the geographical position of the object.

Further, the object determining unit 49 determines an entity of an object from an outline of the recognized and determined object. The entity determining of the object is performed, for example, by being compared with comparison data regarding configurations of various objects previously stored in an unillustrated data storing unit of the travel environment recognition system 42. For example, even when a shape of an object is changing with time, an entity of the object can be estimated if the shape thereof at any point of time is matched or approximately matched to the comparison data. Further, in a case that the detection data obtained by the object data processing unit 48 includes a temperature of an object, the determining is performed as taking the temperature into consideration as well.

The object risk determining unit 50 determines a risk of an object recognized by the object determining unit 49 whether or not the object may become to an obstacle for travelling of the own vehicle. The risk of the object can be determined in degree, that is, to be high or low based on a position of the object, the entity estimated by the target determining unit 49 based on a form thereof, and variations (motion, deformation, and the like) thereof. For example, in a case that an object exists on a road (roadway) on which the own vehicle travels, the risk may become high. In contrast, in a case that an object exists outside the roadway, the risk may be determined to be low. Further, in a case that an object being a person or a vehicle is moving to be close to the own vehicle, the risk may be determined to be high.

The object display instructing unit 51 provides an instruction to the display controller 5 of the vehicle-use image display system 2 so that an outline of an object recognized by the object determining unit 49 is displayed at the front windshield 15 being the display device 4 of the own vehicle 14. The instruction provided by the object display instructing unit 51 includes information regarding a position and risk of the object in addition to outline information of the object. It is preferable that the positional information of the object indicates a display position at the display device 4 calculated by the object data processing unit 48 as described above.

The display controller 5 that has received the instruction for image displaying from the object display instructing unit 51 prepares a displaying outline that indicates an outline of the designated object and provides an instruction to the display device 4 to display the outline at a specific display position at the front windshield 15. The displaying outline of the object is prepared to be matched to an outline of the object included in the instruction from the object display instructing unit 51 using data, that is previously stored in a data file of the display information storing portion 6, including a variety of image displaying patterns and display methods.

It is preferable that the displaying outline of the object is formed of an outline line that continues along the outline of the target recognized by the object determining unit 49. A thickness of the outline line may be variable as being determined, for example, in accordance with a distance from the own vehicle to the object. Owing to that the outline line is formed thick when the object is close to the own vehicle and is formed thinner as the object exists farther, the driver and an occupant of the own vehicle can recognize the distance to the object instantaneously and intuitively.

The color of the outline line may be varied, for example, as being determined in accordance with the risk of the object. When the risk is low or normal, the outline line may be displayed in relatively non-striking color such as blue and green. When the risk of the target becomes high, the outline line may be displayed in yellow, orange, and red in accordance therewith in a stepped manner. When the risk of the target becomes extremely high, the outline line may be displayed with blinking and/or fluorescence. Owing to such displaying in color and with color variation, it is possible to provide the driver and an occupant of the own vehicle with cautions for the risk of the object as well as existence thereof.

In a case that the entity of the object determined by the object determining unit 49 is included in the instruction from the object display instructing unit 51, displaying outlines may be displayed in colors that are classified for each kind of objects. Accordingly, it becomes easy for the driver and an occupant of the own vehicle to recognize instantaneously and intuitively travel environment in front of and around the own vehicle viewed through the front windshield 15. In this case, the risk of each object can be recognized by the driver and an occupant of the own vehicle owing to that the displaying outline is displayed with blinking and/or fluorescence.

When a displaying position for the displaying outline at the front windshield 15 is included in the instruction from the object display instructing unit 51, displaying is performed in accordance therewith. When the instruction from the object display instructing unit 51 includes only the relative position and/or the geographical position of the object obtained by the object data processing unit 48, the display controller 5 can calculate the displaying position at the front windshield 15 using an arithmetic function of an own or another CPU and the like.

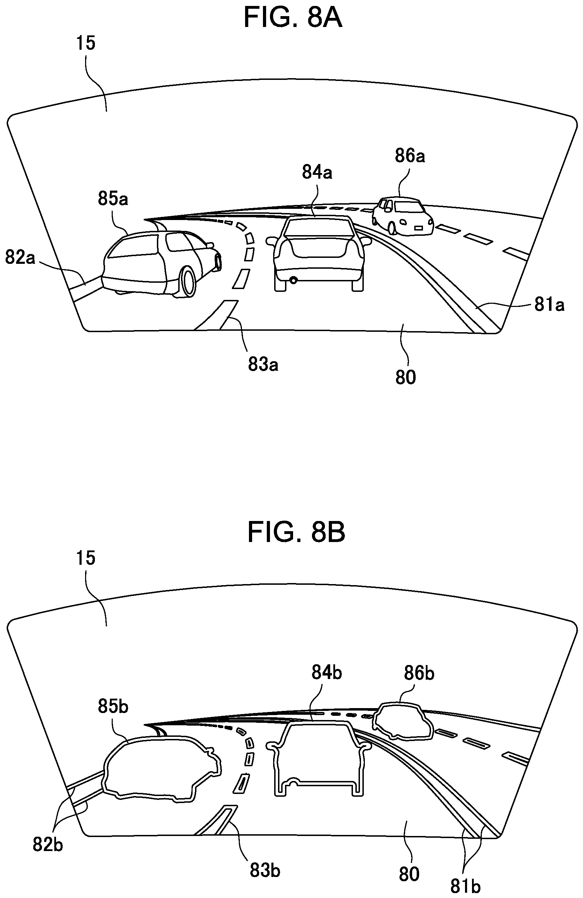

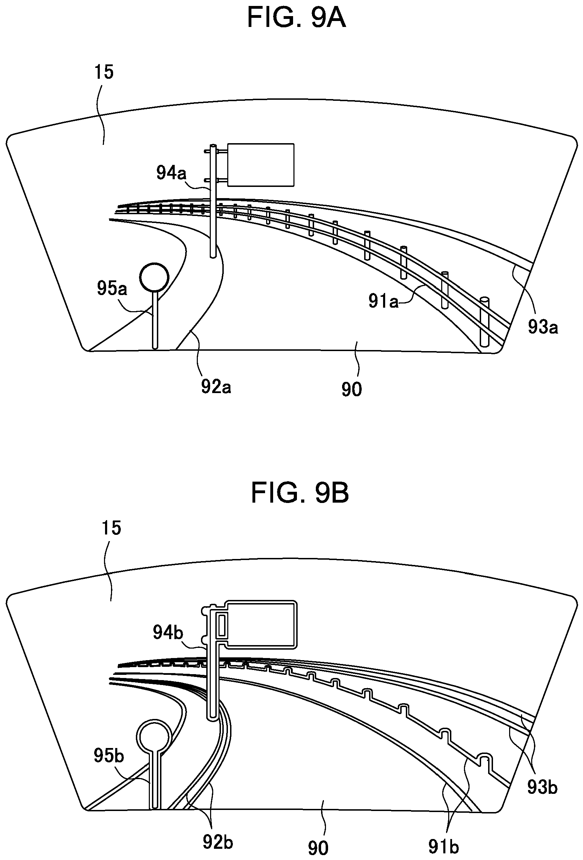

FIGs. 8A to 11B illustrate examples of a variety of image displaying to be displayed at the display device 4 being the front windshield 15 when driving a vehicle using the driving support system of FIG. 6. FIG. 8A illustrates actual scenery viewed through the front windshield 15 or to be viewed in low visibility environment. FIG. 8B illustrates synthesized scenery in which image displaying due to the vehicle-use image display system 2 is superimposed to the actual scenery at the front windshield 15. The above is the same for FIGs. 9A to 11B.

FIG. 8A illustrates actual scenery through the front windshield 15 in a case that the own vehicle is travelling on a road 80 having two lanes on each side. In FIG. 8A, objects to be recognized by the travel environment recognition system 42 are a center median 81 a indicating a boundary of a road boundary, a road shoulder 82a and a lane line 83a in the travelling direction, an overtaking lane, other vehicles 84a to 86a each travelling in the travelling direction or on the opposing lane.

FIG. 8B illustrates synthesized scenery in which displaying outlines 81 b to 86b of the objects recognized by the travel environment recognition system 42 are superimposed on the front windshield 15 by the vehicle-use image display system 2. The displaying outlines 81 b to 83b respectively indicating the center median 81 a, the road shoulder 82a, and the lane line 83a can be matched more accurately to the actual scenery with use of the map information and/or the road information provided from the car navigation system 47 and the positional information and/or the traffic information obtained from the outside through the communication portion 46.

The risk, that is, the possibility to be an obstacle for travelling of the own vehicle, of each of the other vehicles 84a, 85a travelling in the same travelling direction varies in accordance with a separation distance from the own vehicle. When the separation distance therefrom becomes short, each of the displaying outlines 84b, 85b of the other vehicles 84a, 85a may be displayed while the outline line thereof is thickened and/or is displayed in color varied to a striking color such as yellow, orange, and red, or with blinking and/or fluorescence, for calling attention of the driver.

On the contrary, the risk to the own vehicle of the other vehicle 86a travelling on the opposing lane is considered to be low as long as the other vehicle 86a is separated from the travelling direction side by the center median 81a. In this case, even when the separation distance from the own vehicle becomes short, it may be enough to provide, to the driver, a feeling of short distance to the other vehicle 86a only varying a thickness of the outline line without varying the displaying color.

There is a case that a state of the center median 81a can be recognized through information provided from the car navigation system 47 or information obtained from the outside through the communication portion 46. Normally, data processing on the information from the car navigation system 47 and the outside is performed by the travel environment recognition controller 43 of the travel environment recognition system 42. Specifically, as described above, the object data processing unit 48 performs data processing and the object determining unit 49 recognizes travel environment on and around the road on which the own vehicle is travelling. As a result thereof, when the center median 81 a is simply a lane line or is low to the degree that a vehicle can easily climbs over, it is preferable that the displaying outline 86b is displayed in color varied or with blinking and/or fluorescence for calling attention of the driver on the risk corresponding to the separation distance, similarly to the display outlines 84b, 85b.

Owing to that the synthesized scenery of FIG. 8B is displayed at the front windshield 15 as described above, the driver of the own vehicle can travel safely on the travelling direction side of the road 80 having two lanes on each side even in a case of low visibility environment in which the actual scenery of FIG. 8A is almost invisible. Further, even in a case that another vehicle on the road 80 having two lanes on each side may be a possible obstacle, it is possible to prevent the vehicle from becoming to an obstacle.

FIG. 9A illustrates actual scenery through the front windshield 15 in a case that the own vehicle is travelling in a curved zone of a road 90 having one lane on each side. In FIG. 9A, objects to be recognized by the travel environment recognition system 42 are a guardrail 91 a arranged at a center median that indicates a boundary of the lanes, road shoulders 92a, 93a respectively in the travelling direction and the opposing direction, and a pole 94a for a direction board and a road sign pole 95a that are arranged beside a road shoulder.

FIG. 9B illustrates synthesized scenery in which displaying outlines 91 b to 95b of the objects recognized by the travel environment recognition system 42 are superimposed on the front windshield 15 by the vehicle-use image display system 2. Each of the objects is a road boundary or a road appendage and positions and shapes thereof are not varied with time. Accordingly, it is preferable that the displaying outlines 91 b to 95b are displayed so that a separation distance and variation thereof from the own vehicle can be recognized instantaneously and intuitively by the driver.

For example, the displaying outline 91 b of the guardrail 91 a may be displayed with the thickness of the outline line continuously varied as being thick on the side close to the own vehicle and being thin on the side far thereto. Further, the color thereof may be varied from a non-striking color to a striking color as approaching to the own vehicle, for example, from blue or green to yellow, orange, and red continuously from the far side to the close side. Further, it is possible to provide the driver with a sense of perspective of the pole 94a and the road sign pole 95a by causing an outline line of the displaying outline 95a on the close side to be displayed thicker than an outline line of the displaying outline 94b on the far side. Further, in a case that risks of the pole 94a and the road sign pole 95a are different due to respective locations on the road, the displaying outlines 94b, 95b may be displayed in different colors corresponding to magnitudes of the risks.

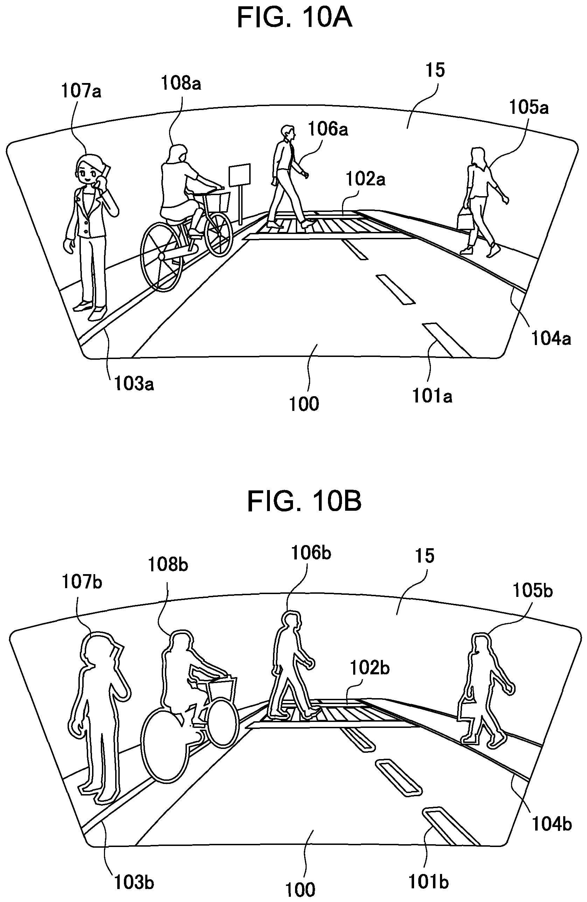

FIG. 10A illustrates actual scenery through the front windshield 15 in a case that the own vehicle is travelling in a town on a road 100 having one lane on each side. In FIG. 10A, a center line 101 a and a crosswalk 102a are formed on the road 100 and walking paths are formed on both sides of the road 100 via road shoulders 103a, 104a. In this case, objects to be recognized by the travel environment recognition system 42 are the center line 101 a, the crosswalk 102a, and the road shoulders 103a, 104a formed on the road 100, pedestrians 105a to 107a each walking on the walking path or the crosswalk or standing on the walking path, and a bicycle 108a travelling beside the road 100 along the road shoulder 103.

Entity determination of that the pedestrians 105a to 107a are pedestrians (persons) and the bicycle 108a is a bicycle is performed by the object determining unit 49 of the travel environment recognition system 42. The object determining unit 49 performs the determination by detecting an outline of each of the objects from processing data of the object data processing unit 48 and comparing the outline with the object data previously stored in the data storing unit of the travel environment recognition system 42.

FIG. 10B illustrates synthesized scenery in which displaying outlines 101 b to 108b of the objects recognized by the travel environment recognition system 42 are superimposed on the front windshield 15 by the vehicle-use image display system 2. The center line 101 a, the crosswalk 102a, and the road shoulders 103a, 104a are a boundary of the road and display on the road. On the contrary, since actions of the pedestrians 105a to 107a and the bicycle 108a are difficult to be predicted, those are generally considered to be with high risks. Accordingly, it is preferable that displaying outlines 105b to 108b of the pedestrians 105a to 107a and the bicycle 108a are displayed to easily call attention of the driver.

For example, all persons (mainly, pedestrians) and bicycles detected in a range within a predetermined distance may be displayed in orange on a road in town as in FIG. 10A. Then, when the risk is increased due to movement to be closer to the own vehicle, shortened separation distance, or the like, the color of displaying may be varied into red or displaying thereof may be varied to be with blinking and/or fluorescence. Since a pedestrian and a bicycle are greatly different in shape with respect to the displaying outlines 105b to 108b, discrimination thereof can be easily performed by the driver even when those are displayed in the same color.

Meanwhile, the displaying outlines 101b to 104b of the center line 101 a, the crosswalk 102a, and the road shoulders 103a, 104a that are a boundary of the road and display on the road may be displayed similarly to the case in FIG. 9B as described above. That is, those may be normally displayed in a color that is less striking than the color for a pedestrian and a bicycle, for example, in blue or green. Thickness of the outline lines may be varied in accordance with a separation distance from the own vehicle. Further, when the risk is increased due closing within a certain distance, it is possible to be displayed in color varied to a striking color such as red or with blinking and/or fluorescence.

Since the crosswalk 102a is display on the road, it is enough to display the displaying outline 102b in a color that calls attention such as yellow even when the separation distance from the own vehicle becomes short. In a case that a pedestrian or a bicycle exists on or around the crosswalk 102a, existence thereof can be recognized by the driver easily with sufficient attention, for example, by displaying the displaying outline thereof in a more striking color, for example, in orange or red and/or displaying with blinking and/or fluorescence.

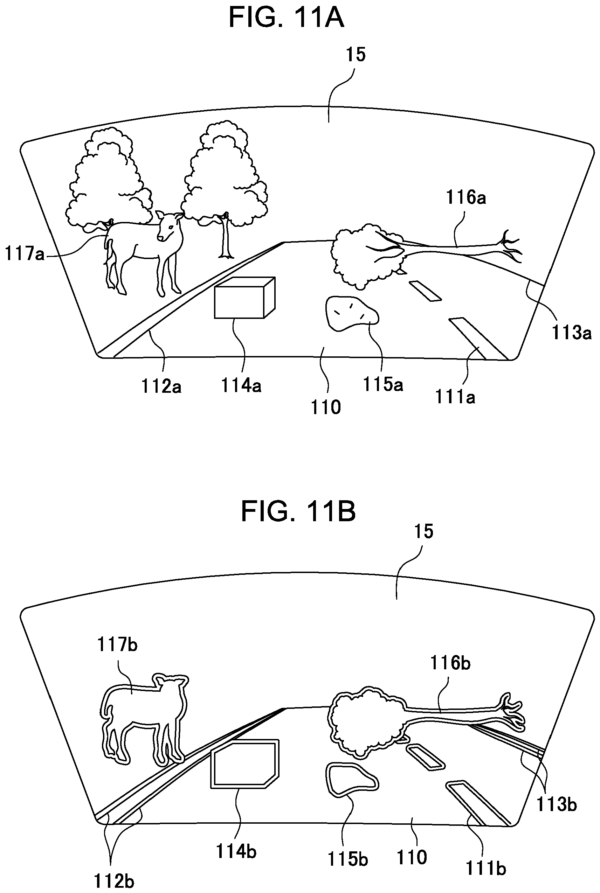

FIG. 11A illustrates actual scenery through the front windshield 15 in a case that the own vehicle is travelling in a suburb on a road 110 having one lane on each side. In FIG. 11A, objects to be recognized by the travel environment recognition system 42 are a center line 111 a formed at the center of the road 110, road shoulders 112a, 113a on both sides, a fallen object 114a left on a travelling lane, a depression or crack 115a formed in the vicinity of the center line 111 a, a fallen tree 116a that blocks an opposing lane, and a wild animal 117a that appears beside the road 110.

Entity determination of the fallen object 114a, the depression 115a, and the wild animal 117a is performed by the object determining unit 49 of the travel environment recognition system 42. The object determining unit 49 performs the determination by detecting an outline of each of the objects from processing data of the object data processing unit 48 and comparing the outline with the object data previously stored in the data storing unit of the travel environment recognition system 42.

FIG. 11B illustrates synthesized scenery in which displaying outlines 111 b to 117b of the objects recognized by the travel environment recognition system 42 are superimposed on the front windshield 15 by the vehicle-use image display system 2. The center line 111 a and the road shoulders 112a, 113a are a boundary of the road and display on the road. On the contrary, the fallen object 114a, the depression 115a, and the fallen tree 116a are obviously dangerous obstacles on the road that disturb travelling of the own vehicle. Accordingly, it is preferable that the displaying outlines 114b to 116b thereof are displayed to indicate the highest risk, for example, in red from the beginning and/or with blinking and/or fluorescence to call attention of the driver at maximum.

Since actions of the wild animal 117a are more difficult to be predicted than those of a pedestrian and there is a possibility that the wild animal 117a abruptly runs out onto the road, the wild animal 117a is generally considered to be with high risk. Accordingly, it is preferable that the displaying outline 117b of the wild animal 117a is displayed to call attention of the driver in the degree being the same as or higher than a pedestrian. For example, the color and the displaying method of the displaying outline 117b may be selected as described with respect to the pedestrian and the bicycle in FIG. 10B.

As described above, the entity determination of the objects in FIG. 10A and FIG. 11A is performed by the object determining unit 49 performing comparison with the object data in the date storing unit of the travel environment recognition system 42. However, in actuality, it is expected to be difficult to clearly identify entities of a pedestrian, a bicycle, a fallen object, a depression, a fallen tree, a wild animal, and the like only by being compared with the object data.

Accordingly, in an embodiment, the object determining unit 49 obtains environment information on and around a road on which the own vehicle is travelling based on information obtained from the car navigation system 47 and/or the outside on which data processing is performed by the travel environment recognition controller 43 of the travel environment recognition system 42. Then, the object determining unit 49 determines whether or not the object is a structural object existing on or around the road. If the object is not a structural object, the object determining unit 49 determines that the object is an obstacle with a risk. That is, objects fixedly or expectedly arranged on or around a road and other objects are discriminated from each other, and properties such as a color, a thickness of an outline line, and a displaying method of an displaying outline of each object are varied as being in accordance therewith and taking into account each expected risk.

According to the above, the driver of the own vehicle can recognize, in real time based on displaying outlines of objects, how safely the own vehicle is travelling on a planned road and what kind of and/or what degree of an obstacle or a risk exists and predict a risk that may be caused subsequently thereto. As a result, it becomes possible to safely drive a vehicle even in low visibility environment at night or in adverse weather.

In another embodiment, in addition to color variation and displaying with blinking and/or fluorescence of displaying outlines of an object, a warning sound may be emitted to give a warning to a driver, in real time, that the risk of the object has increased during travelling. The warning sound may be a voice sound or a signal sound such as "pi" and "pi, pi".

The emission of the warning sound may be performed using a plurality of speakers 29 arranged to surround a driver's seat of the automobile 14, for example, as illustrated in FIG. 2. In a case that the speakers 29 serve as a part of a surround stereo system that forms a three-dimensional sound field in the automobile 14, it is possible to control that the warning sound comes from a direction of the object with an increased risk. Such control of the warning sound is performed, for example, by the travel environment recognition controller 43 of the travel environment recognition system 42.

In the above, description is provided in detail on preferable embodiments of the present invention. Here, not limited thereto, the present invention may be actualized with a variety of modifications within the technical scope thereof. For example, the display controller 5 may be arranged in the ACC system 3 of FIG. 1 or the travel environment recognition system 42 of FIG. 6. Further, it is also possible to integrate the display information storing portion 6 with the data storing unit of the travel environment recognition system 42.

### EXPLANATION OF REFERENCES

- 1: Driving support system
- 2: Vehicle-use image display system
- 3: ACC system
- 4: Display device
- 5: Display controller
- 6: Display information storing portion
- 7: ACC controller
- 8: Accelerating system
- 9: Braking system
- 10: Input portion
- 11: Preceding vehicle detecting portion
- 12: Own vehicle speed sensor
- 14: Own vehicle
- 15: Front windshield
- 16: Front camera
- 18: Rear camera
- 20,21: Radar sensor
- 23: Dashboard
- 24: Head-up display device
- 26: Monitor device
- 29: Speaker
- 30: Actual scenery
- 32, 34: Preceding vehicle
- 35, 36: Marking image
- 42: Travel environment recognition system
- 43: Travel environment recognition controller
- 44: Front object detecting portion
- 45: Travel state detecting portion
- 46, 55: Communication portion
- 47: Car navigation system
- 48: Object data processing unit
- 49: Object determining unit
- 50: Object risk determining unit
- 51: Object display instructing unit
- 54: Other vehicle
- 56: Road
- 57: Communication chip
- 60: Server
- 62: Internet
- 71: Tailing travel control unit
- 72: Constant-speed travel control unit
- 73: Target vehicle determining unit
- 80, 90, 100, 110: Road
- 81b ∼ 86b, 91 b ∼95b, 101b ∼ 108b, 111b ∼ 117b: Displaying outline

## Claims

1. A vehicle-use image display system to be used for supporting driving of an own vehicle, comprising:
a display device configured to use a front windshield of the own vehicle for screen displaying; and
a display controller configured to control image displaying, by the display device, of an object detected in front of the own vehicle,
wherein the display controller displays a marking image having a shape corresponding to an outline of the object to be superimposed to the object actually existing in actual scenery viewed through the front windshield, and the display controller adjusts and varies a displaying property of the marking image in accordance with possible influence to be caused by the object to a drive behavior of the own vehicle.

2. The vehicle-use image display system according to claim 1, wherein the display controller adjusts and varies the display property of the marking image further in accordance with a category of the object.

3. The vehicle-use image display system according to claim 1 or claim 2,
wherein the display property of the marking image includes color, thickness, brightness, and presence or absence of blinking or fluorescence.

4. The vehicle-use image display system according to any one of claims 1 to 3,
wherein the marking image represents an outline line of the object.

5. The vehicle-use image display system according to any one of claims 1 to 4,
wherein the object is a target preceding vehicle detected to be tailed by the own vehicle, and
the influence is a grade of a detection state of the target preceding vehicle.

6. The vehicle-use image display system according to any one of claims 1 to 4,
wherein the object is a travel environment to be recognized in front of the own vehicle, and
the influence is a risk with respect to travelling of the own vehicle.

7. The vehicle-use image display system according to claim 6, wherein the travel environment includes one or more of another vehicle and a pedestrian on and/or around a road, a road boundary, a road display, a road appendage, an obstacle on a road, and an animal.

8. A vehicle-use image display method for supporting driving of an own vehicle by causing a display device that uses a front windshield of the own vehicle for screen displaying to perform image displaying of an object detected in front of the own vehicle,
wherein the image displaying is controlled so that a marking image having a shape corresponding to an outline of the object is superimposed to the object actually existing in actual scenery viewed through the front windshield, and so that a displaying property of the marking image is adjusted and varied in accordance with possible influence to be caused by the object to a drive behavior of the own vehicle.

9. The vehicle-use image display method according to claim 8, wherein displaying property of the marking image is adjusted and varied further in accordance with a category of the object.

10. The vehicle-use image display method according to claim 8 or claim 9,
wherein the display property of the marking image includes color, thickness, brightness, and presence or absence of blinking or fluorescence.

11. The vehicle-use image display method according to any one of claims 8 to 10,
wherein the object is a target preceding vehicle detected to be tailed by the own vehicle, and
the influence is determined in accordance with a grade of a detection state of the target preceding vehicle.

12. The vehicle-use image display method according to any one of claims 8 to 10,
wherein the object is a travel environment to be recognized in front of the own vehicle, and
the influence is determined based on a risk with respect to travelling of the own vehicle.

13. The vehicle-use image display method according to claim 12, wherein the travel environment includes one or more selected from another vehicle and a pedestrian on and/or around a road, a road boundary, a road display, a road appendage, an obstacle on a road, and an animal.
